# FASCICULE DE BREVET EUROPEEN

(11) **EP 3 682 531 B1**
(45) Date de publication et mention de la délivrance du brevet: **17.04.2024**
(21) Numéro de dépôt: 18765131.0
(22) Date de dépôt: 11.09.2018
(51) Int. Cl.: H02K 5/22, H02K 3/52

(54) **SYSTÈME DE CONNEXION POUR MACHINE ÉLECTRIQUE**
VERBINDUNGSSYSTEM FÜR EINE ELEKTRISCHE MASCHINE
CONNECTION SYSTEM FOR AN ELECTRICAL MACHINE

(30) Priorité: 12.09.2017 FR 1758439
(43) Date de publication de la demande: 22.07.2020
(73) Titulaire: MMT AG, 6300 Zug (CH)
(72) Inventeur: THIERRY, Benjamin, 25120 Maiche (FR); BILLOTTE, Christophe, 90500 Beaucourt (FR)
(74) Mandataire: IP Trust
(86) Numéro de dépôt international: PCT/EP2018/074446
(87) Numéro de publication internationale: WO 2019/053002

(56) Documents cités:
- EP-A2- 2 798 727
- EP-A2- 3 007 330
- EP-B1- 2 606 558
- WO-A1-2017/062824

## Description

### Domaine de l'invention

La présente invention concerne le domaine des machines électriques et notamment des actionneurs électromagnétiques sans balai. L'invention concerne plus spécifiquement la connexion électrique des bobines de machines électriques par des sous-ensembles conducteurs découpés, appelés en anglais « lead frames ». Ces sous-ensembles de connexion facilitent l'automatisation de la fabrication des machines électriques en limitant les opérations de soudure et d'assemblage.

### Etat de la technique

On connaît dans l'état de la technique la demande de brevet DE102012205710 qui décrit un exemple de sous-ensemble de connexion statorique. Ce document de l'art antérieur décrit une machine électrique comportant un stator à plusieurs parties formé de plusieurs segments de stator individuels comportant des enroulements. Une paroi extérieure de gaine est maintenue contre une paroi intérieure du boîtier. Une grille de perforation est connectée électriquement aux enroulements. Les segments de stator formés dans une partie de paroi extérieure de gaine de la paroi extérieure sont pourvus d'ouvertures. Une extrémité d'enroulement est guidée vers l'ouverture extérieure, de sorte qu'une partie de contact de grille de poinçonnage est formée entre la paroi extérieure de la gaine et la paroi intérieure du boîtier.

Le brevet français FR2996072 décrit un autre exemple d'ensemble de connexion électrique pour un moteur électromagnétique sans balai comprenant un ensemble statorique bobiné à P phases électriques et X bobines par phase, chaque bobine présentant à proximité un corps muni de deux encoches de connexion, caractérisé en ce qu'il est constitué par un premier sous-ensemble formé de W pistes découpées dans une feuille conductrice, lesdites pistes formant W pistes de sortie coplanaires, W étant un nombre entier compris entre P et P+1, chacune desdites W pistes se terminant par au moins une extrémité repliée perpendiculairement au plan desdites pistes, la forme de ladite extrémité repliées étant complémentaire à la forme de l'encoche de connexion, lesdites pistes étant réunies par une matière plastique isolante.

Une autre solution est décrite dans le brevet français FR2923951 concernant un ensemble de connexion électrique d'un moteur électromagnétique sans balai comprenant un ensemble statorique bobiné à 3 phases électriques et X bobines par phase, reliées en parallèle ou en série, caractérisé en ce qu'il comprend un guide-fil circulaire à encoches destiné à maintenir les extrémités des fils des bobines et un support de connexion contenant au moins 3 pistes conductrices circulaires, 3 de ces dites pistes étant terminées chacune par une cosse, et qui sont prolongées axialement par des pince-fils venant assurer, au travers des encoches du guide-fils, le contact électrique des 3 phases du moteur et en ce que les cosses sont sorties hors du moteur au travers d'un connecteur.

Une autre solution encore est décrite dans la demande de brevet européen EP1526628 décrivant un stator pour un moteur électrique. Celui-ci se caractérise par un paquet de stator en forme d'anneau qui comporte un grand nombre de dents de stator. Sur le côté avant du paquet de stator se trouve une unité de câblage en forme d'anneau. Celle-ci contient des éléments de changement de direction. L'unité de câblage présente un composant porteur qui comporte un espace creux et des fentes. Dans l'espace creux, se trouvent plusieurs anneaux de jarretière isolés électriquement les uns des autres, qui comportent chacun des éléments de contact, qui sont dirigés vers l'extérieur, par l'intermédiaire des fentes.

La demande de brevet internationale WO2016110425 décrit une pièce d'interconnexion d'un stator d'une machine électrique ainsi qu'un procédé de fabrication d'une telle pièce, au moyen de laquelle un enroulement électrique du stator peut être raccordé à une fiche de connexion personnalisée en vue d'une alimentation. Cette pièce d'interconnexion présente un anneau fermé sous forme de corps de matière plastique, sur lequel sont formés d'un seul tenant trois éléments de support s'étendant axialement, dans lesquels s'étendent axialement des fiches de raccordement en métal, les fiches de raccordement axiales étant chacune formées d'un seul tenant avec des éléments conducteurs, lesquels peuvent être directement raccordés électriquement à des fils de connexion de l'enroulement électrique.

La demande de brevet EP2110925 concerne une autre solution formée par un anneau de distribution de courant électrique d'une machine électrique rotative comprenant plusieurs anneaux de bus en forme d'anneau, dont chacun doit être connecté à plusieurs bobines disposées dans la machine électrique rotative, les bobines correspondant chacune à des phases de la machine électrique rotative ; plusieurs éléments de fixation qui sont fixés aux anneaux de bus et disposés le long de la direction circonférentielle de ceux-ci ; et plusieurs bornes de connexion qui sont fixées aux anneaux de bus et disposées le long de ladite direction circonférentielle, et qui peuvent être connectées à une des sections de ligne principales des bobines.

Le document WO 2017/062824 A1 divulgue une machine électrique comportant un ensemble de connexion.

### Inconvénients de l'art antérieur

Un premier inconvénient est la complexité d'assemblage induite par les solutions précédentes.

Un autre inconvénient est que les solutions de l'art antérieur sont limitées à des machines électriques de faible puissance, car le raccordement ne permet de transmettre que des courants de faibles intensités (typiquement inférieurs à quelques ampères).

Enfin, un autre inconvénient est le coût potentiellement élevé de ces solutions qui demandent un nombre de pièces et de manipulations importantes.

### Solution apportée par l'invention

Le but premier de la présente invention est de simplifier encore l'assemblage d'une machine électrique et la connexion électrique des bobines par un sous-ensemble de raccordement, ainsi que de réduire les coûts de réalisation de l'ensemble de connectique.

Afin de remédier à ces inconvénients, la présente invention concerne selon son acception la plus générale une machine électrique selon la revendication 1.

Avantageusement, ladite extrémité de connexion présente une fente longitudinale délimitée par au moins deux languettes déformables s'étendant à partir de la première extrémité de ladite lame en direction du centre de ladite lame, de manière convergente.

De préférence, ladite extrémité de connexion de raccordement de l'extrémité de bobinage est auto-dénudante.

Selon un mode de mise en œuvre particulier, ladite extrémité opposée présente deux broches de raccordement parallèles.

Avantageusement, ledit ensemble de connexion est constitué par un premier sous-ensemble formé de N pistes coplanaires découpées dans une feuille conductrice, lesdites N pistes de sortie, N étant un nombre entier compris entre P et P+l où P désigne le nombre de pôles électriques, chacune desdites N pistes étant réunies par une matière plastique isolante.

Selon une première variante, lesdites broches de connexion sont rigides et en ce que les plots de raccordement complémentaires présentent des lèvres déformables élastiquement entre une position où leurs bords délimitent une ouverture de section inférieure à la section transversale de la broche, et une position où les bords desdites lèvres viennent en appui contre la surface latérale de ladite broche.

Selon une seconde variante, lesdites broches sont déformables élastiquement dans le plan transversal et en ce que les trous complémentaires présentent une section inférieure à la section transversale des broches au repos.

L'invention concerne aussi un procédé d'assemblage d'une machine électrique selon la revendication 8.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une vue en perspective d'un premier exemple de réalisation d'un moteur électrique selon l'invention,
- la figure 2 représente une vue en perspective d'un ensemble de connexion selon un deuxième exemple de réalisation,
- la figure 3 représente une vue en perspective d'un troisième exemple de réalisation d'un moteur électrique selon l'invention,
- la figure 4 représente une vue en perspective d'une bobine selon une première variante,
- la figure 5 représente une vue en perspective d'une bobine selon une deuxième variante,
- la figure 6 représente une vue en perspective d'une bobine selon une troisième variante,
- la figure 7 représente une vue en perspective d'un ensemble de connexion selon une première variante,
- la figure 8 représente une vue en perspective d'un ensemble de connexion selon une deuxième variante,
- la figure 9 représente une vue en perspective d'un ensemble de connexion selon un autre exemple de réalisation
- la figure 10 représente une vue en perspective d'un autre exemple de réalisation d'un moteur électrique selon l'invention.

### Description générale du moteur

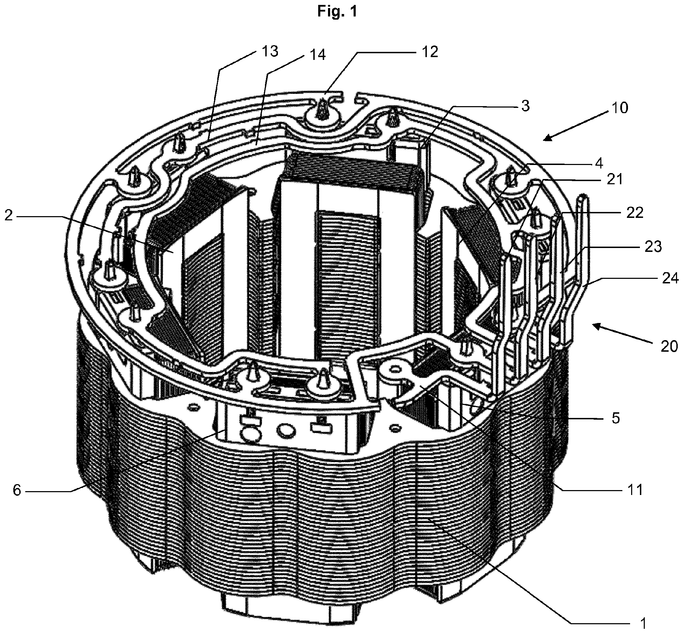

La figure 1 représente la structure statorique sans rotor et sans surmoulage dans un premier mode de réalisation.

La structure statorique est constituée par un empilement (1) de tôles d'acier feuilletées découpées, de mêmes dimensions, les unes sur les autres. Un vernis isolant électrique déposé sur chaque tôle permet de limiter la circulation du courant d'une tôle à sa voisine afin de réduire ces courants de Foucault, donc l'échauffement du circuit magnétique.

Chacune des tôles magnétiques, en un seul morceau ou en secteurs pour les circuits magnétiques de grande dimension, présente des prolongements orientés radialement, vers le centre de la tôle, alternant avec des encoches, pour recevoir des corps supportant chacun une bobine (2 à 6) constituée d'un enroulement en cuivre isolé par une résine.

Une structure de connexion (10) assure la liaison entre les bobinages et un connecteur (20) pour le branchement d'un connecteur extérieur.

Cette structure de connexion (10) est constituée de conducteurs plans arqués rigides formant une piste arquée (11) pour une mise à la masse électrique du stator -réduisant les émissions CEM- et de trois pistes arquées (12 à 14) de liaison des bobinages des trois pôles électriques (pour un moteur triphasé et illustré ici avec deux bobines par phase connectées en parallèle et en montage triangle).

Dans le premier exemple décrit, les extrémités des pistes (11 à 14) forment un peigne connecteur (20) présentant quatre broches de connexion (21 à 24) parallèles, recourbées dans l'exemple décrit à 90 degrés vers le haut par rapport au plan transversal des quatre pistes (11 à 14).

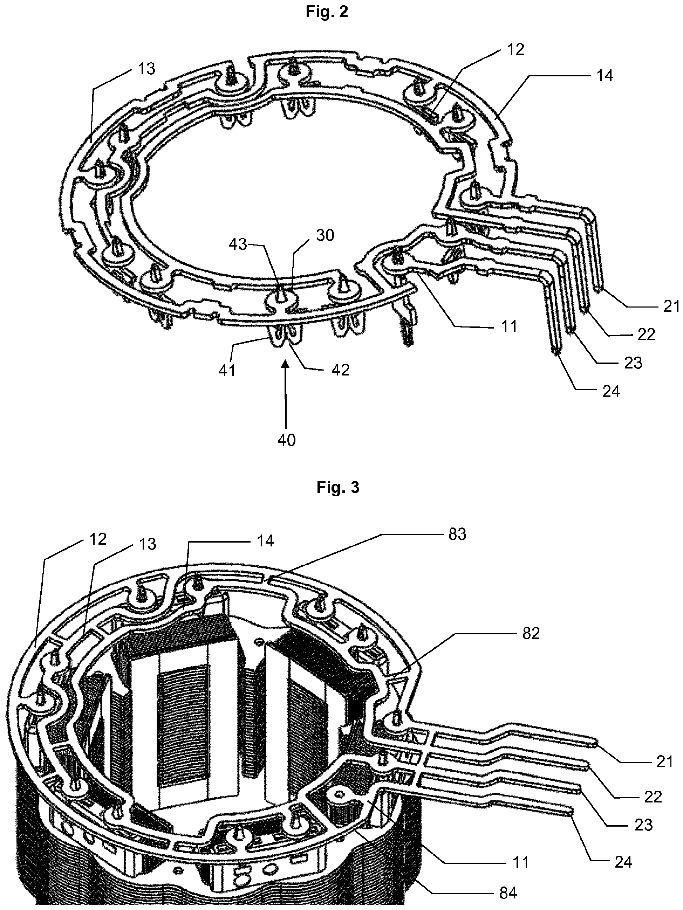

La figure 3 représente une alternative où les quatre broches de connexion (21 à 24) sont parallèles et s'étendent dans un plan parallèle au plan contenant les quatre pistes (11 à 14). On peut observer, dans cet exemple de réalisation, les pistes (11 à 14) encore reliées entre elles par des ponts (82, 83, 84) -tous n'étant pas pointés ici- qui ne sont montrés ici que pour illustrer le fait que ces pistes (11 à 14) peuvent être découpées dans une seule feuille de matière. Ces ponts (82 à 84) doivent être ensuite coupés afin d'éliminer la liaison électrique entre pistes (11 à 14).

### Description de la structure de connexion

La figure 2 représente une vue détaillée de la structure de connexion selon un deuxième exemple de réalisation où les broches de connexion (21 à 24) sont repliées à 90 degrés vers le bas et non pas vers le haut comme dans l'exemple illustré par la figure 1.

Chaque piste (11 à 14) présente des tronçons arqués et des plots de raccordement élargis (30) percés. Ces perçages sont destinés à l'engagement de l'extrémité de connecteurs (40).

Ces connecteurs (40) sont formés par une lame rigide conductrice, sensiblement plane, présentant une partie inférieure (41) et une broche (43).

La partie inférieure (41) présente une fente (42) se refermant en direction de l'extrémité supérieure. Cette fente (42) est délimitée par deux bras convergents, pour l'introduction en force du fil de bobinage. Cette extrémité forme un système de connexion auto-dénudant de type « IDC - Insulation-displacement connector » (désignation anglaise). La connexion de la broche (43) aux plots de raccordement (30) est réalisée à la manière d'une connectique de type « press-fit ».

### Premier exemple de bobine

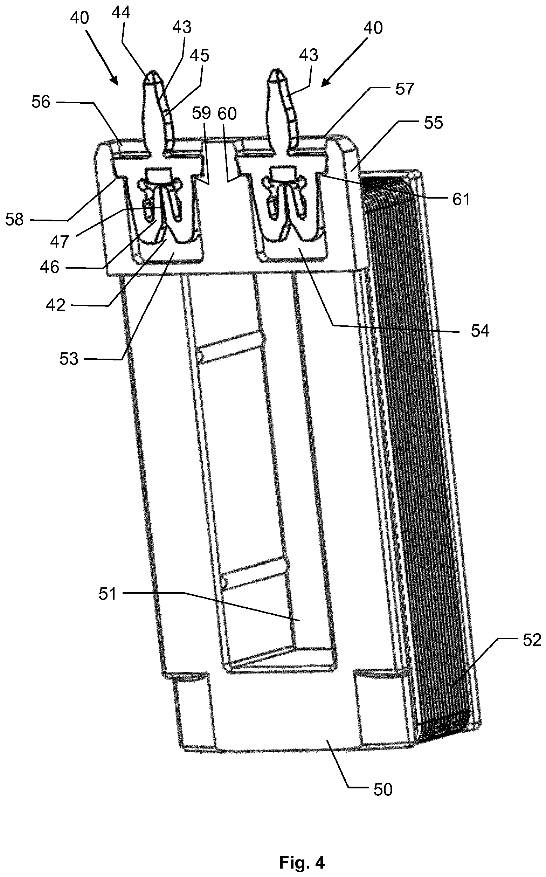

La figure 4 représente un premier exemple de réalisation d'une bobine selon l'invention.

La bobine est formée par un corps (50) en une matière isolante, par exemple en plastique injecté, définissant une cavité centrale (51) dont la section correspond à la section extérieure d'une dent statorique, pour permettre son insertion autour d'une dent par glissement selon une direction radiale.

Un bobinage (52) formé par un fil conducteur électrique (par exemple du cuivre) isolé par un vernis est enroulé autour de ce corps (50).

Les deux extrémités du fil de bobinage traversent des logements (53, 54) formés dans un prolongement vertical (55) du corps de bobine (50).

Ce prolongement (55) s'ouvre à la face frontale supérieure par des fentes (56, 57) débouchant dans les logements (53, 54) de forme trapézoïdale, avec des épaulements (58, 59, 60, 61) formant un appui pour des épaulements complémentaires formés sur la partie inférieure des connecteurs (40).

L'extrémité supérieure des connecteurs (40) forme une broche (43) de section transversale rectangulaire, avec une pointe pyramidale (44) prolongée par une partie (45) renflée formant un connecteur à emmanchement (« pressfit » en anglais).

Cette broche (43) est destinée à être emmanchée dans le plot de raccordement (30) de la structure de connexion. La partie renflée (45) peut être pleine ou traversée par une lumière du type « chas d'aiguille ». Cette dernière solution permet de réduire la pression d'insertion dans le plot de raccordement (30) de la structure de connexion (10) par un effet de double ressort assuré par les deux flancs de part et d'autre de la lumière.

L'extrémité inférieure s'ouvre par une fente longitudinale (42) délimitée par deux bras (46, 47) convergeant vers le haut.

Lorsque le fil du bobinage traverse transversalement la cavité (53), l'insertion du connecteur (40) dans le logement (53) par l'intermédiaire de la fente (56) va provoquer l'engagement du fil dans la fente (42), puis l'élimination de l'isolant par le frottement et le pincement des bras (46, 47) qui assurent également la liaison électrique par le pincement croissant en fonction de l'enfoncement du connecteur, jusqu'à ce que les épaulements de ce dernier arrivent en butée contre les épaulements (57, 58) de la cavité (53). Ensuite, l'application des plots de raccordement (30) de l'ensemble de connexion sur la tête (44) puis l'appui de l'ensemble de connexion par une pression axiale par rapport au circuit statorique assurent l'engagement des broches (43) dans les plots de raccordement et la liaison par l'élasticité respective de la broche (43) et du plot de raccordement (30) récepteur, assurant une bonne conduction électrique.

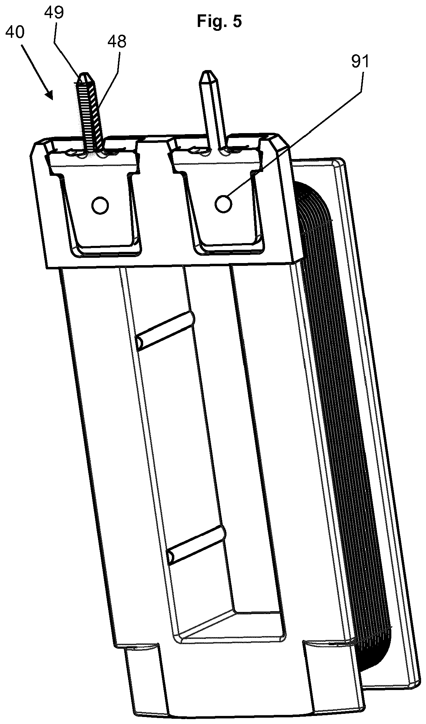

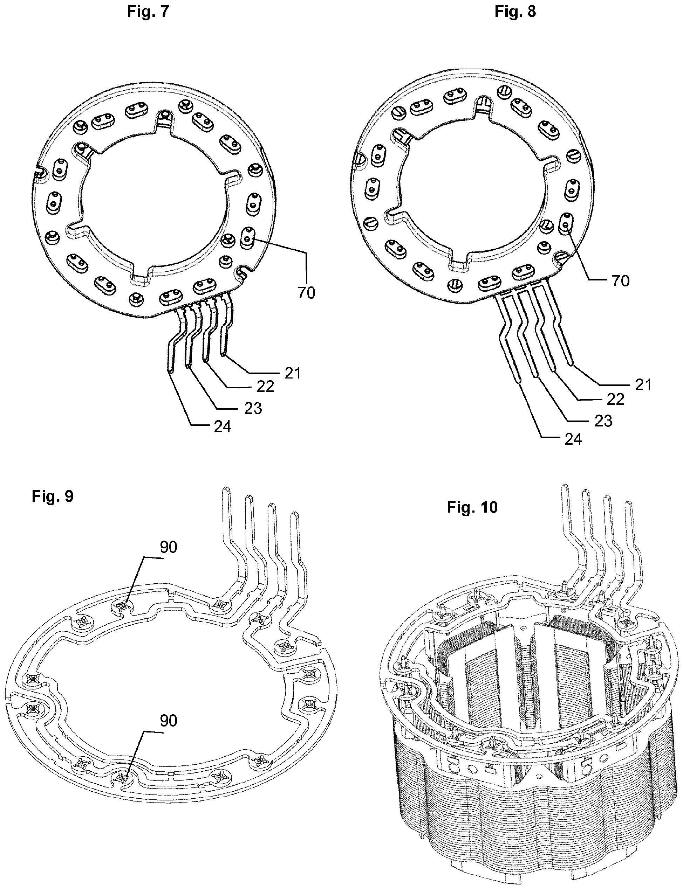

La figure 5 représente une variante de réalisation où la broche (43) est rigide et non déformable. Elle présente un tronçon (48) prolongé par une tête pyramidale (49), destinée à l'engagement dans un plot de raccordement (30) présentant des lèvres (90) déformables élastiquement, comme visibles en figure 9.

La connexion est réalisée par l'insertion des broches (43) en érection par rapport à la surface supérieure des corps de bobines, dans les plots de raccordement (30) prévus dans les pistes (11 à 14) de la structure de connexion. Ces plots de raccordement (30) présentent, pour cette variante, une ouverture dans laquelle s'étendent des lèvres (90) déformables définissant une zone d'insertion, préférentiellement en forme de croix, que la tête (49) puis le tronçon (48) de section carrée vient traverser. Cette forme particulière permet de griffer les pattes de connexion et d'assurer le contact électrique. Des striures présentes sur le tronçon (48) permettent, de plus, le maintien ferme de la connexion. La figure 10 présente l'ensemble de connexion de la figure 9 monté sur un ensemble statorique.

Dans cette réalisation de la figure 5, le raccordement du fil de bobinage est proposé selon une soudure de l'extrémité (91) dudit fil aux connecteurs (40). Il s'agit en effet d'une alternative à la connectique par déplacement d'isolant précédemment présenté. Toute autre réalisation de raccordement du fil de bobinage aux connecteurs, tel que par pincement par exemple est aussi possible, ce raccordement n'étant pas limitatif pour la présente invention.

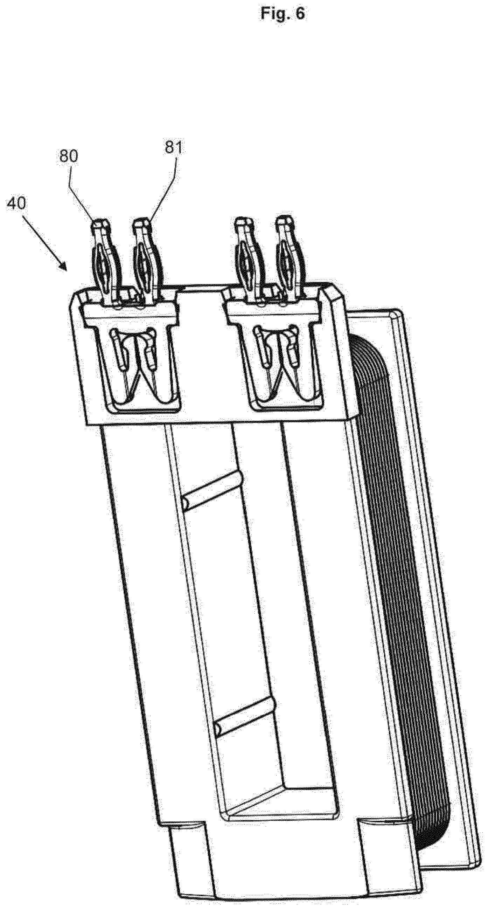

La figure 6 représente une variante où le connecteur (40) présente deux tronçons (80, 81) permettant de doubler l'intensité du courant qui peut être transmis par la structure de connexion (10) et plus particulièrement par les pistes (11 à 14) aux bobinages. Cette solution est bien sûr réalisable avec tout type de tronçons, sous une forme rigide et pleine ou sous une forme déformable transversalement. De même, le nombre de tronçons possible n'est pas limité à deux.

Les figures 7 et 8 représentent des vues respectivement de dessous et de dessus de la structure de connexion (10) après surmoulage avec une matière plastique assurant le maintien des pistes (11 à 14). Le surmoulage présente des ouvertures (70) correspondant aux plots de raccordement (30) et permettant l'engagement des connecteurs (40). Ainsi, l'ensemble de connexion (10) est réalisé par un surmoulage des pistes arquées avec une matière plastique dépourvu de circuit électronique. Par conséquent, ce sont uniquement des pistes toutes seules sans circuit imprimé (PCB) connectées aux bobines. L'électronique de pilotage ou des composants additionnels sont extérieurs au moteur. Le signal de commande des bobines est calculé et envoyé depuis l'extérieur du moteur. Cela permet de réaliser l'ensemble de connexion de manière simple et pratique en surmoulant de matière plastique ces pistes en utilisant des techniques de surmoulage robustes mécaniquement, imposant des températures et pressions non compatibles avec les circuits électroniques.

## Revendications

1. - Machine électrique comprenant d'une part un moteur électromagnétique et d'autre part un ensemble de connexion complémentaire, ledit moteur électromagnétique comprenant un circuit magnétique statorique présentant des dents s'étendant radialement et des bobines (2 à 6) entourant une partie au moins desdites dents, chaque bobine (2 à 6) étant formée par un enroulement (52) d'un conducteur isolé autour d'un corps (50) isolant, chaque enroulement (52) comprenant deux extrémités d'enroulement, l'ensemble de connexion (10) comprenant un premier sous-ensemble formé de pistes arquées (11 à 14) conductrices, chacune desdites pistes arquées (11 à 14) se terminant d'un côté par au moins une broche de connexion (21 à 24) s'étendant selon une direction de connexion et de l'autre côté par un plot de raccordement (30) avec l'une desdites bobines (2 à 6), lesdites pistes arquées (11 à 14) étant réunies par une matière plastique isolante, lesdits corps isolants (50) desdites bobines (2 à 6) présentant à leur partie supérieure deux fentes (56, 57) pour l'insertion de connecteurs (40) formés chacun par une lame conductrice présentant une première extrémité de connexion présentant une zone de raccordement adaptée pour recevoir et engager de manière conductrice une des extrémités d'enroulement (52) de la bobine (2 à 6), et une broche (43) sur la deuxième extrémité, opposée à ladite zone de raccordement et formant une connexion insérée de force et sans soudure dans un plot de raccordement (30) complémentaire formé dans une desdites pistes arquées (11 à 14), l'ensemble de connexion (10) étant, réalisé par un surmoulage des pistes arquées avec une matière plastique et étant dépourvu de circuit électronique.

2. - Machine électrique selon la revendication 1 **caractérisée en ce que** ladite fente (42) est ouverte vers un bord transversal de la lame et est longitudinale et délimitée par au moins deux bras (46, 47) déformables s'étendant à partir de ladite première extrémité de ladite lame en direction du centre de ladite lame, de manière convergente.

3. - Machine électrique selon la revendication 2 **caractérisée en ce que** ladite première extrémité de connexion de raccordement de l'extrémité d'enroulement est auto-dénudante.

4. - Machine électrique selon la revendication 1 **caractérisée en ce que** ladite extrémité opposée présente deux broches de raccordement parallèles.

5. - Machine électrique selon la revendication 1 **caractérisée en ce que** ledit ensemble de connexion est constitué par un premier sous-ensemble formé de N pistes (11 à 14) coplanaires découpées dans une feuille conductrice, N étant un nombre entier compris entre P et P+l où P désigne le nombre de terminaisons électriques, chacune desdites N pistes étant réunies par une matière plastique isolante.

6. - Machine électrique selon la revendication 1 **caractérisée en ce que** lesdites broches (43) de connexion sont rigides et **en ce que** les plots de raccordement (30) complémentaires présentent des lèvres (90) déformables élastiquement entre une position où leurs bords délimitent une ouverture de section inférieure à la section transversale de la broche, et une position où les bords desdites lèvres viennent en appui contre la surface latérale de ladite broche.

7. - Machine électrique selon la revendication 1 **caractérisé en ce que** lesdites broches (43) sont déformables élastiquement dans le plan transversal et **en ce que** les trous complémentaires (30) présentent une section inférieure à la section transversale des broches (43) au repos.

8. - Procédé d'assemblage d'une machine électrique comprenant d'une part un moteur électromagnétique et d'autre part un ensemble de connexion complémentaire, ledit moteur électromagnétique comprenant un circuit magnétique statorique présentant des dents s'étendant radialement et des bobines (2 à 6) entourant une partie au moins desdites dents, chaque bobine (2 à 6) étant formée par un enroulement (52) d'un conducteur isolé autour d'un corps (50) isolant, chaque enroulement (52) comprenant deux extrémités d'enroulement, l'ensemble de connexion (10) comprenant un premier sous-ensemble formé de pistes arquées (11 à 14) conductrices, chacune desdites pistes arquées (11 à 14) se terminant d'un côté par au moins une broche de connexion (21 à 24) s'étendant selon une direction de connexion et de l'autre côté par un plot de raccordement (30) avec l'une desdites bobines (2 à 6), lesdites pistes arquées (11 à 14) étant réunies par une matière plastique isolante, lesdits corps isolants (50) desdites bobines (2 à 6) présentant à leur partie supérieure deux fentes (56, 57), l'ensemble de connexion (10) étant réalisé par un surmoulage des pistes arquées avec une matière plastique et étant dépourvu de circuit électronique le procédé comportant
- une première étape de préparation des bobines consistant à insérer dans chacune de fentes (56, 57) prévues à la partie supérieure desdits corps (50) isolants desdites bobines (2 à 6) un connecteur (40) formé par une lame conductrice présentant une première extrémité de connexion présentant une fente (42) ouverte vers un bord transversal de la lame, adaptée pour recevoir et engager de manière conductrice de une des extrémités d'un des enroulements (52) de la bobine ; et une deuxième extrémité opposée formant une broche (43) de raccordement insérée de force sans soudure dans un pot de raccordement (30) complémentaire formé dans une desdites pistes arquées (11 à 14),
- une deuxième étape consistant à positionner les bobines (2 à 6) ainsi préparées sur le circuit magnétique statorique,
- une troisième étape consistant à appliquer par un déplacement axial ledit ensemble de connexion pour l'insertion des broches (43) de raccordement des connecteurs des bobines dans les pot de raccordement (30) complémentaires dudit ensemble de connexion.

## Patentansprüche

1. Elektrische Maschine, umfassend einerseits einen elektromagnetischen Motor und andererseits eine komplementäre Verbindungsanordnung, der elektromagnetische Motor umfassend einen Statormagnetkreis, der Zähne, die sich radial erstrecken, und Spulen (2 bis 6) aufweist, die einen Teil mindestens der Zähne umgeben, wobei jede Spule (2 bis 6) durch eine Wicklung (52) eines isolierten Leiters um einen isolierenden Körper (50) herum ausgebildet ist, jede Wicklung (52) umfassend zwei Wicklungsenden, die Verbindungsanordnung (10) umfassend eine erste Unteranordnung, die aus bogenförmigen Leiterbahnen (11 bis 14) ausgebildet ist, wobei jede der bogenförmigen Bahnen (11 bis 14) auf einer Seite mit mindestens einem Verbindungsstift (21 bis 24), der sich in einer Verbindungsrichtung erstreckt, und auf der anderen Seite mit einem Kontakt (30) zum Anschließen an die eine der Spulen (2 bis 6) endet, wobei die bogenförmigen Bahnen (11 bis 14) durch einen isolierenden Kunststoff zusammengefügt sind, wobei die isolierenden Körper (50) der Spulen (2 bis 6) an ihrem oberen Teil zwei Schlitze (56, 57) für die Einführung von Verbindern (40) aufweisen, die jeweils durch eine leitende Zunge ausgebildet sind, die ein erstes Verbindungsende, das eine Anschlusszone aufweist, die zum Aufnehmen und Ineingriffnehmen auf leitende Weise eines der Wicklungsenden (52) der Spule (2 bis 6) angepasst ist, und einen Stift (43) an dem zweiten Ende aufweist, gegenüber der Anschlusszone und der eine Verbindung ausbildet, die mit Gewalt und ohne Verschweißen in einen komplementären Anschlusskontakt (30) eingeführt ist, der in einer der bogenförmigen Bahnen (11 bis 14) ausgebildet ist, wobei die Verbindungsanordnung (10) durch eine Umspritzung der bogenförmigen Bahnen mit einem Kunststoff ausgeführt ist und ohne elektronischen Schaltkreis ist.

2. Elektrische Maschine nach Anspruch 1, **dadurch gekennzeichnet, dass** der Schlitz (42) zu einem Querrand der Zunge hin offen ist und in Längsrichtung verläuft und durch mindestens zwei verformbare Arme (46, 47) begrenzt ist, die sich auf konvergierende Weise von dem ersten Ende der Zunge in Richtung der Mitte der Zunge erstrecken.

3. Elektrische Maschine nach Anspruch 2, **dadurch gekennzeichnet, dass** das erste Anschlussverbindungsende des Wicklungsendes selbstabisolierend ist.

4. Elektrische Maschine nach Anspruch 1, **dadurch gekennzeichnet, dass** das gegenüberliegende Ende zwei parallele Anschlussstifte aufweist.

5. Elektrische Maschine nach Anspruch 1, **dadurch gekennzeichnet, dass** die Verbindungsanordnung aus einer ersten Unteranordnung besteht, die aus N koplanaren Bahnen (11 bis 14) ausgebildet ist, die aus einer leitenden Folie ausgeschnitten sind, wobei N eine ganze Zahl ist, die zwischen P und P+1 liegt, wobei P die Zahl von elektrischen Endpunkten bezeichnet, wobei jede der N Bahnen durch einen isolierenden Kunststoff zusammengefügt ist.

6. Elektrische Maschine nach Anspruch 1, **dadurch gekennzeichnet, dass** die Verbindungsstifte (43) starr sind, und dass die komplementären Anschlusskontakte (30) verformbare Lippen (90) aufweisen, die zwischen einer Position, in der ihre Ränder eine Öffnung mit kleinerem Abschnitt als dem Querschnitt des Stifts begrenzen, und einer Position elastisch verformbar sind, in der die Ränder der Lippen an der seitlichen Oberfläche des Stifts anliegen.

7. Elektrische Maschine nach Anspruch 1, **dadurch gekennzeichnet, dass** die Stifte (43) in der Querebene elastisch verformbar sind, und dass die komplementären Löcher (30) einen kleineren Abschnitt als den Querschnitt der Stifte (43) in Ruhe aufweisen.

8. Verfahren zum Montieren einer elektrischen Maschine, umfassend einerseits einen elektromagnetischen Motor und andererseits eine komplementäre Verbindungsanordnung, der elektromagnetische Motor umfassend einen Statormagnetkreis, der Zähne, die sich radial erstrecken, und Spulen (2 bis 6) aufweist, die einen Teil mindestens der Zähne umgeben, wobei jede Spule (2 bis 6) durch eine Wicklung (52) eines isolierten Leiters um einen isolierenden Körper (50) herum ausgebildet ist, jede Wicklung (52) umfassend zwei Wicklungsenden, die Verbindungsanordnung (10) umfassend eine erste Unteranordnung, die aus bogenförmigen Leiterbahnen (11 bis 14) ausgebildet ist, wobei jede der bogenförmigen Bahnen (11 bis 14) auf einer Seite mit mindestens einem Verbindungsstift (21 bis 24), der sich in einer Verbindungsrichtung erstreckt, und auf der anderen Seite mit einem Kontakt (30) zum Anschließen an die eine der Spulen (2 bis 6) endet, wobei die bogenförmigen Bahnen (11 bis 14) durch einen isolierenden Kunststoff zusammengefügt sind, wobei die isolierenden Körper (50) der Spulen (2 bis 6) an ihrem oberen Teil zwei Schlitze (56, 57) aufweisen, wobei die Verbindungsanordnung (10) durch eine Umspritzung der bogenförmigen Bahnen mit Kunststoff ausgeführt ist und ohne elektronischen Schaltkreis ist, wobei das Verfahren vorweist:
- einen ersten Schritt zum Vorbereiten der Spulen, bestehend aus dem Einführen in jeden der Schlitze (56, 57), die an dem oberen Teil der isolierenden Körper (50) der Spulen (2 bis 6) vorgesehen sind, eines Verbinders (40) der durch eine leitende Zunge ausgebildet ist, die ein erstes Verbindungsende, das einen Schlitz (42) aufweist, der zu einem Querrand der Zunge hin offen ist, der zum Aufnehmen und Ineingriffnehmen auf leitende Weise eines der Enden einer der Wicklungen (52) der Spule angepasst ist; und ein gegenüberliegendes zweites Ende aufweist, das einen Anschlussstift (43) ausbildet, der mit Gewalt ohne Verschweißen in einen komplementären Anschlusskontakt (30) eingeführt wird, der in einer der bogenförmigen Bahnen (11 bis 14) ausgebildet ist,
- einen zweiten Schritt, bestehend aus einem Positionieren der Spulen (2 bis 6), die so vorbereitet werden, auf dem Statormagnetkreis,
- einen dritten Schritt, bestehend aus einem Anwenden durch eine axiale Verschiebung der Verbindungsanordnung für die Einführung der Anschlussstifte (43) der Verbinder der Spulen in die komplementären Anschlusskontakte (30) der Verbindungsanordnung.

## Claims

1. Electric machine comprising an electromagnetic motor and a complementary connection assembly, said electromagnetic motor comprising a magnetic stator circuit having radially extending teeth and coils (2 to 6) surrounding at least part of said teeth, each coil (2 to 6) being formed by a winding (52) of an insulated conductor around an insulating body (50), each winding (52) comprising two winding ends, the connection assembly (10) comprising a first subassembly formed by arcuate conductive tracks (11 to 14), each of said arcuate tracks (11 to 14) terminating at one end in at least one connection pin (21 to 24) which extends in a connection direction and terminating at the other end in a pad (30) for coupling to one of said coils (2 to 6), said arcuate tracks (11 to 14) being joined by an insulating plastics material, the insulating bodies (50) of said coils (2 to 6) having two slots (56, 57) on their upper part for inserting connectors (40), each formed by a conductive blade having a first connection end having a coupling zone suitable for receiving and conductively engaging one of the winding (52) ends of the coil (2 to 6), and a pin (43) on the second end, opposite said coupling zone and forming a connection which is forcibly inserted, without welding, into a complementary coupling pad (30) formed in one of said arcuate tracks (11 to 14), the connection assembly (10) being produced by overmolding the arcuate tracks with a plastics material and being devoid of an electronic circuit.

2. Electric machine according to claim 1, **characterized in that** said slot (42) is open toward a transverse edge of the blade and is longitudinal and delimited by at least two deformable arms (46, 47) extending from said first end of the blade toward the center of said blade, in a convergent manner.

3. Electric machine according to claim 2, **characterized in that** said first connection end for coupling the winding end is an insulation displacement connection end.

4. Electric machine according to claim 1, **characterized in that** said opposite end has two parallel coupling pins.

5. Electric machine according to claim 1, **characterized in that** said connection assembly consists of a first subassembly formed of N coplanar tracks (11 to 14) cut in a conductive sheet, N being an integer between P and P+1 where P denotes the number of electrical terminals, each of said N tracks being joined by an insulating plastics material.

6. Electric machine according to claim 1, **characterized in that** said connection pins (43) are rigid and **in that** the complementary coupling pads (30) have lips (90) which are elastically deformable between a position in which their edges delimit an opening with a section smaller than the cross-section of the pin, and a position in which the edges of said lips bear against the lateral surface of said pin.

7. Electric machine according to claim 1, **characterized in that** said pins (43) are elastically deformable in the transverse plane and **in that** the complementary holes (30) have a section smaller than the cross-section of the pins (43) when at rest.

8. Method for assembling an electric machine comprising an electromagnetic motor and a complementary connection assembly, said electromagnetic motor comprising a magnetic stator circuit having radially extending teeth and coils (2 to 6) surrounding at least part of said teeth, each coil (2 to 6) being formed by a winding (52) of an insulated conductor around an insulating body (50), each winding (52) comprising two winding ends, the connection assembly (10) comprising a first subassembly formed by arcuate conductive tracks (11 to 14), each of said arcuate tracks (11 to 14) terminating at one end in at least one connection pin (21 to 24) which extends in a connection direction and terminating at the other end in a pad (30) for coupling to one of said coils (2 to 6), said arcuate tracks (11 to 14) being joined by an insulating plastics material, the insulating bodies (50) of said coils (2 to 6) having two slots (56, 57) on their upper part, the connection assembly (10) being produced by overmolding the arcuate tracks with a plastics material and being devoid of an electronic circuit, the method comprising
- a first step of preparing the coils consisting in inserting, into each of the slots (56, 57) which are provided in the upper part of the insulating bodies (50) of said coils (2 to 6), a connector (40) which is formed by a conductive blade having a first connection end having a slot (42) which is open toward a transverse edge of the blade, suitable for receiving and conductively engaging an end of one of the windings (52) of the coil; and a second opposite end forming a coupling pin (43) which is forcibly inserted, without welding, into a complementary coupling pad (30) formed in one of said arcuate tracks (11 to 14),
- a second step consisting in positioning the coils (2 to 6) thus prepared on the magnetic stator circuit,
- a third step consisting in applying, by an axial movement, said connection assembly for inserting the coupling pins (43) of the coil connectors into the complementary coupling pads (30) of said connection assembly.
